(19) Europäisches Patentamt
European Patent Office
Office européen des brevets

(11) Veröffentlichungsnummer : **0 119 534**
**B1**

(12) **EUROPÄISCHE PATENTSCHRIFT**

(45) Veröffentlichungstag der Patentschrift : **07.05.86**

(51) Int. Cl.$^4$ : **C 07 F 9/40**, C 07 F 9/44, A 01 N 57/22, A 01 N 57/30

(21) Anmeldenummer : **84102345.0**

(22) Anmeldetag : **05.03.84**

(54) **Phosphonsäureester.**

(30) Priorität : **18.03.83 JP 44315/83**

(43) Veröffentlichungstag der Anmeldung : **26.09.84 Patentblatt 84/39**

(45) Bekanntmachung des Hinweises auf die Patenterteilung : **07.05.86 Patentblatt 86/19**

(84) Benannte Vertragsstaaten : **AT BE CH DE FR GB IT LI NL**

(56) Entgegenhaltungen :
**EP-A- 0 097 270**
**FR-A- 1 350 718**
**US-A- 3 755 511**

(73) Patentinhaber : **NIHON TOKUSHU NOYAKU SEIZO K.K.**
**No. 4, 2-chome, Nihonbashi Honcho Chuo-ku**
**Tokyo 103 (JP)**

(72) Erfinder : **Saito, Junichi**
**3-7-12, Osawa**
**Mitaka-shi Tokyo (JP)**
Erfinder : **Kudamatsu, Akio**
**179, Kariyado Nakahara-ku**
**Kawasaki-shi Kanagawa-ken (JP)**
Erfinder : **Kume, Toyohiko**
**6-7-8, Asahigaoka**
**Hino-shi Tokyo (JP)**
Erfinder : **Tsuboi, Shinichi**
**3-26-1, Hirayama**
**Hino-shi Tokyo (JP)**

(74) Vertreter : **Schumacher, Günter, Dr. et al**
**c/o Bayer AG Konzernverwaltung RP Patentabteilung**
**D-5090 Leverkusen 1 Bayerwerk (DE)**

**EP 0 119 534 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Phosphonsäureester, Verfahren zu ihrer Herstellung sowie insektizide, mitizide und nematizide Mittel.

Die vorliegende Erfindung betrifft Phosphonsäureester der allgemeinen Formel (I)

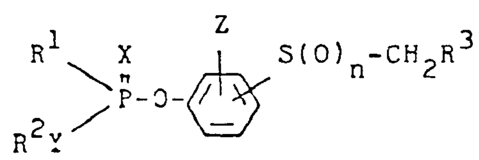

(I)

in der

$R^1$ eine niedere Alkyl-Gruppe, die Phenyl, α-Naphthyl- oder β-Naphthyl-Gruppe bezeichnet,
$R^2$ eine niedere Alkyl-Gruppe oder eine niedere Alkoxy-Niederalkyl-Gruppe bezeichnet,
$R^3$ eine fluor-substituierte niedere Alkyl-Gruppe bezeichnet,
X ein Sauerstoff- oder Schwefel-Atom bezeichnet,
Y ein Sauerstoff- oder Schwefel-Atom oder eine Gruppe der Formel

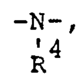

in der $R^4$ für ein Wasserstoff-Atom oder eine niedere Alkyl-Gruppe steht, bezeichnet,
Z ein Wasserstoff-Atom, ein Halogen-Atom oder eine niedere Alkyl-Gruppe bezeichnet und
n 0 oder 2 bezeichnet.

Der Ausdruck « Niederalkyl » betrifft jeweils einen $C_1$-$C_4$-Aliphaten.

Die Verbindungen der allgemeinen Formel (I) können mittels der folgenden Verfahren hergestellt werden, auf die sich die vorliegende Erfindung ebenfalls ertreckt.

Verfahren i)

Ein Verfahren zur Herstellung der Phosphonsäureester der allgemeinen Formel (I) umfaßt die Reaktion einer Verbindung der allgemeinen Formel

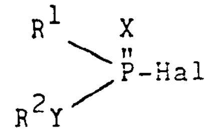

(II)

in der

$R_1$, $R_2$, X und Y die im Vorstehenden angegebenen Bedeutungen haben und
Hal ein Halogen-Atom bezeichnet,

mit einer Verbindung der allgemeinen Formel

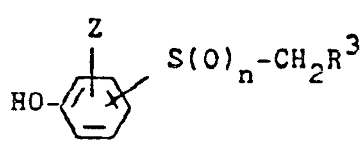

(III)

in der $R^3$, Z und n die im Vorstehenden angegebenen Bedeutungen haben, in Gegenwart einer Base.

Verfahren ii)

Ein Verfahren zur Herstellung der Phosphonsäureester der allgemeinen Formel (I) umfaßt die Reaktion einer Verbindung der allgemeinen Formel

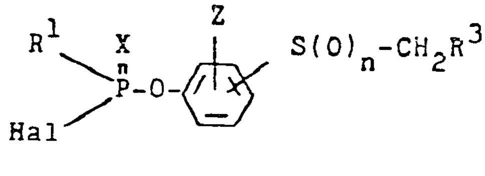

(IV)

in der $R^1$, $R^3$, X, Z, n und Hal die im Vorstehenden angegebenen Bedeutungen haben, mit einer Verbindung der allgemeinen Formel

$$H—Y—R^2$$

in der $R^2$ und Y die im Vorstehenden angegebenen Bedeutungen haben, in Gegenwart einer Base.

Verbindungen der allgemeinen Formel (I), in denen n = 2 ist, können auch mittels des folgenden Verfahrens hergestellt werden.

Verfahren iii)

Ein Verfahren zur Herstellung eines Phosphonsäureesters der allgemeinen Formel

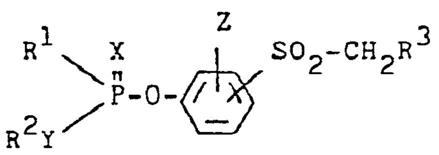

(I-b)

in der $R^1$, $R^2$, $R^3$, X, Y und Z die im Vorstehenden angegebenen Bedeutungen haben, umfaßt die Reaktion einer Verbindung der allgemeinen Formel

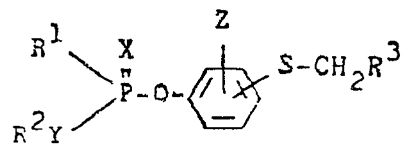

(I-a)

in der $R^1$, $R^2$, $R^3$, X, Y und Z die im Vorstehenden angegebenen Bedeutungen haben, mit einem Peroxid.

Die vorliegende Erfindung betrifft außerdem insektizide, mitizide und nematizide Mittel, die die Phosphonsäureester der allgemeinen Formel (I) als Wirkstoffe enthalten.

Die US-PS 4 139 615 (entsprechend der JP-OS 151151/1977), stellt sinngemäß fest, daß Verbindungen der allgemeinen Formel

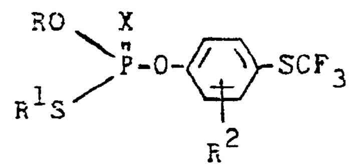

(A)

in der

R und $R^1$ Alkyl sind,

$R^2$ Wasserstoff oder Alkyl ist und

X Sauerstoff oder Schwefel ist, insektizide, mitizide und nematizide Aktivitäten besitzen.

Es wurde gefunden, daß die Phosphonsäureester der allgemeinen Formel (I), in unerwarteter Weise herausragende biologische Aktivitäten besitzen.

Die Untersuchungen der Anmelderin erbrachten als Ergebnis, daß die aktiven Verbindungen der Formel (I) eine sehr gute Bekämpfungswirkung gegenüber Schadinsekten, Milben und Nematoden in Land- und Forstwirtschaft und Gartenbau zeigen und technisch ausgezeichnete pestizide Wirksamkeit besitzen, die die in der oben angeführten, bekannten Veröffentlichung beschriebenen Verbindungen in keiner Weise zu erreichen vermögen, die strukturell den Verbindungen gemäß der vorliegenden Erfindung zu ähneln scheinen.

Aus diesem Grunde ist es ein Ziel der vorliegenden Erfindung, die neuen Phosphonsäureester der allgemeinen Formel (I), Verfahren zu ihrer Herstellung und ihre Verwendung als insektizide, mitizide und nematizide Mittel verfügbar zu machen.

Die vorgenannten und weitere Ziele und Vorteile der vorliegenden Erfindung werden aus der folgenden Beschreibung deutlich.

Die aktiven Verbindungen der vorliegenden Erfindung zeigen eine genaue Bekämpfungswirkung gegen schädliche Insekten, Milben und Nematoden, ohne daß sie in irgendeiner Weise phytotoxisch gegen Kulturpflanzen wirken. Die Verbindungen gemäß der vorliegenden Erfindung können zur Bekämpfung und Ausrottung einer großen Mannigfaltigkeit von Schädlingen, saugenden und beißenden Insekten, anderen Pflanzenparasiten, Schädlingen von Lagergetreide und Schädlingen, die auf dem Gebiet der Hygiene von Bedeutung sind, eingesetzt werden.

Spezielle Beispiele für diese Schädlinge sind nachstehend aufgeührt :

Insekten der Ordnung Coleoptera, wie
Callosobruchus chinensis,
Sitophilus zeamais,
Tribolium castaneum,
Epilachna vigintioctomaculata,
Agriotes fuscicollis,
Anomala rufocuprea,
Leptinotarsa decemlineata,
Diabrotica spp.,
Monochamus alternatus und
Lyctus brunneus ;

Insekten der Ordnung Lepidoptera, wie
Lymantria dispar,
Malacosoma neustria,
Pieris rapae,
Spodoptera litura,
Mamestra brassicae,
Chilo suppressalis,
Pyrausta nubilalis,
Ephestia cautella,
Adoxophyes orana,
Carpocapsa pomonella,
Galleria mellonella und
Phyllocnistis citrella ;

Insekten der Ordnung Hemiptera, wie
Nephotettix cincticeps,
Nilaparvata lugens,
Pseudococcus comstocki,
Unaspis yanonensis,
Myzus persicae,
Aphis pomi,
Rhopalosiphum pseudobrassicae,
Stephanitis nashi,
Nazara spp.,
Cimex lectularius,
Trialeurodes vaporariorum und
Psylla spp. ;

Insekten der Ordnung Orthoptera, wie
Blatella germanica,
Periplaneta americana,
Gryllotalpa africana und
Locusta migratoria migratoriodes ;

Insekten der Ordnung Isoptera, wie
Deucotermes speratus und
Coptotermes formosanus ; sowie

Insekten der Ordnung Diptera, wie
Musca domestica,
Aedes aegypti,
Hylemia platura,
Culex pipiens,
Anopheles sinensis,
Culex tritaeniorhynchus ;

Beispiele für die Milben sind :
Tetranychus telarius,
Panonychus citri,
Aculus pelekassi und
Torronomus spp. und

Beispiele für die Nematoden sind :
Meloidogyne incognita,
Bursaphelenchus lignicolus Mamiya et Kiyohara,
Aphelenchoides besseyi,
Heterodera glycines und
Pratylenchus spp.

Auf dem Gebiet der Tierhaltung und Viehzucht können die neuen Verbindungen gemäß der vorliegenden Erfindung in Wirksamer Weise gegen verschiedene Tierparasiten (innere und äußere Parasiten) wie Milben (einschließlich Zecken), Insekten und Würmer verwendet werden.

Zu speziellen Beispielen für solche Tierparasiten zählen solche Milben wie
Oranithodoros spp.,
Ixodes spp. und
Boophilus spp.,
und solche Insekten wie
Gastrophilus spp.,
Stomoxys spp.,
Trichodectes spp.
Rhodnius spp. und
Ctenocephalidex canis

In der vorliegenden Erfindung werden Substanzen, die eine Bekämpfungswirksamkeit gegenüber diesen Schädlingen aufweisen, gelegentlich durch die Gattungsbegriffe « Schädlingsbekämpfungsmittel » bzw. « Pestizide » bezeichnet.

Die Verbindungen der Formel (I) gemäß der vorliegenden Erfindung können beispielsweise mittels der folgenden Verfahren hergestellt werden :

Verfahren i)

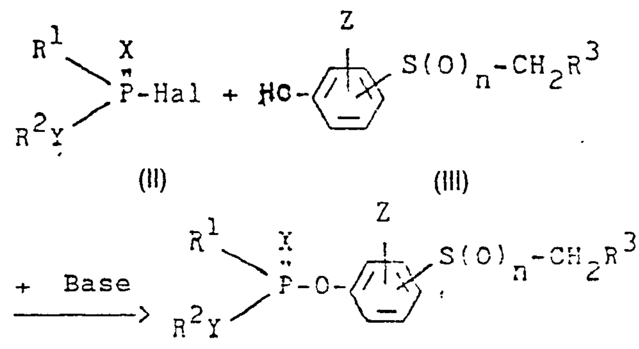


(II) (III)

(I)

In den obigen Formeln haben $R^1$, $R^2$, $R^3$, X, Y, Z, n und Hal die im Vorstehenden angegebenen Bedeutungen.

In dem vorstehenden Reaktionsschema bezeichnet

$R^1$ eine Alkyl-Gruppe oder eine Aryl-Gruppe mit 1 bis 4 Kohlenstoff-Atomen wie Methyl, Ethyl, Propyl, Isopropyl und n-(iso-, sec- oder tert-)Butyl. Besonders bevorzugt sind Methyl und Ethyl. Ferner bedeutet Phenyl, α-Naphthyl und β-Naphthyl. Das bevorzugte Aryl $R^1$ ist Phenyl.

$R^2$ bezeichnet die gleichen $C_1$-$C_4$-Alkyl-Gruppen, wie sie im Vorstehenden beispielhaft genannt sind. Besonders bevorzugt sind Methyl, Ethyl, n- und i-Propyl. Beispiele für die $C_1$-$C_4$-Alkoxy-$C_1$-$C_4$-Alkyl-Gruppen sind solche, die die gleichen $C_1$-$C_4$-Alkyl-Gruppen, wie sie im Vorstehenden beispielhaft genannt sind, und $C_1$-$C_4$-Alkoxy-Gruppen mit der gleichen Alkyl-Struktureinheit, wie sie im Vorstehenden beispielhaft genannt ist, besitzen, wie etwa Ethoxyethyl.

$R^3$ bezeichnet fluoro-substituierte $C_1$-$C_4$-Alkyl-Gruppen mit vorzugsweise 1 bis 5, besonders bevorzugt 1 bis 3 Fluor-Atomen, wie Monofluoromethyl, Difluoromethyl, Trifluoromethyl, α,α,β,β-Tetrafluoroethyl und Pentafluoroethyl. Die $CF_3$-Gruppe wird als $R_3$ besonders bevorzugt.

X bezeichnet ein Sauerstoff- oder Schwefel-Atom, besonders bevorzugt ein Schwefel-Atom.

Y bezeichnet ein Sauerstoff- oder Schwefel-Atom oder die Gruppe

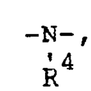

der $R^4$ für ein Wasserstoff-Atom oder die gleiche $C_1$-$C_4$-Alkyl-Gruppe, wie sie oben beispielhaft für $R^1$ angegeben ist, steht, wobei die Methyl-Gruppe als $R^4$ bevorzugt wird.

Z bezeichnet ein Wasserstoff-Atom, ein Halogen-Atom oder eine $C_1$-$C_4$-Alkyl-Gruppe. Spezielle Beispiele für das Halogen-Atom sind Fluor, Chlor, Brom und Iod, vorzugsweise Fluor, Chlor oder Brom. Die $C_1$-$C_4$-Alkyl-Gruppe ist die gleiche, wie sie oben beispielhaft für $R^1$ angegeben ist, etwa die Methyl-Gruppe.

n steht für 0 oder 2 und vorzugsweise für 0.

Hal steht für Halogen-Atom wie es oben beispielhaft angegeben ist. Vorzugsweise bezeichnet Hal ein Chlor- oder Brom-Atom und besonders bevorzugt ein Chlor-Atom.

Spezielle Beispiele für die als Ausgangsmaterial im dem schematisch dargestellten Verfahren (i) zur Herstellung der Verbindung der allgemeinen Formel (I) eingesetzte Verbindung der allgemeinen Formel (II) sind :

O-Ethylmethanthiophosphonylchlorid,
O-Ethylethanthiophosphonylchlorid,
O-Ethylbenzolthiophosphonylchlorid,
N-Methylmethanthiophosphonamidchlorid,
N-Isopropylmethanthiophosphonamidchlorid,
N,N-Dimethylmethanthiophosphonamidchlorid,
S-Propylmethanthiophosphonylchlorid,
S-Propylmethandithiophosphonylchlorid,
S-(2-Ethoxyethyl)methandithiophosphonylchlorid und
O-Ethylmethanphosphonylchlorid.

Die entsprechenden Bromide können ebenfalls als Beispiele angeführt werden.

Zu speziellen Beispielen für die Verbindung der allgemeinen Formel (III), die gleichermaßen ein Ausgangsmaterial ist, zählen :

4-(β,β,β-Trifluoroethylthio)phenol,
3-Methyl-4-(β,β,β-Trifluoroethylthio)phenol,
4-(β,β,β-Trifluoroethylsulfonyl)phenol,
2-(β,β,β-Trifluoroethylthio)phenol,
4-(β,β,γ,γ-Tetrafluoropropylthio)phenol,
2-(β,β,γ,γ-Tetrafluoropropylthio)phenol,
4-(β,β,γ,γ-Pentafluoropropylthio)phenol und
4-(β,β,γ,γ-Tetrafluoropropylsulfonyl)phenol.

Zu speziellen Beispielen für die in dem Verfahren i) gemäß der vorliegenden Erfindung verwendete Base zählen anorganische Basen wie Natriumhydroxid, Kaliumhydroxid, Kaliumcarbonat und Natriumcarbonat und organische Basen wie Triethylamin, Pyridin, N,N-Dimethylanilin und Isopropylamin.

Das vorerwähnte Herstellungsverfahren wird anhand eines typischen Beispiels im einzelnen erläutert.

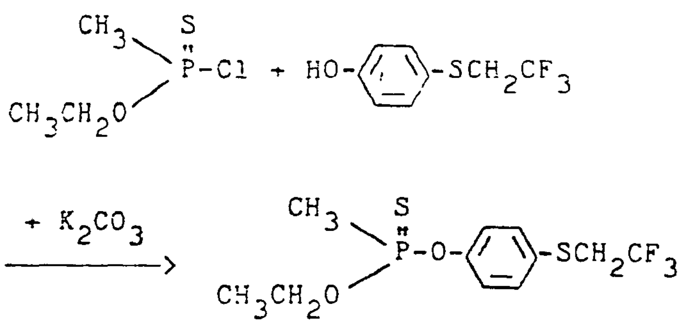


Das Verfahren (i) zur Herstellung der aktiven Verbindungen gemäß der vorliegenden Erfindung kann zweckmäßigerweise unter Verwendung eines Lösungsmittels oder Verdünnungsmittels durchgeführt werden. Zu diesem Zweck können alle inerten Lösungsmittel oder Verdünnungsmittel verwendet werden.

Beispiele für solche Lösungsmittel oder Verdünnungsmittel umfassen Wasser ; aliphatische, alicyclische und aromatische Kohlenwasserstoffe (die gegebenenfalls chloriert sein können) wie Hexan, Cyclohexan, Petrolether, Ligroin, Benzol, Toluol, Xylol, Methylenchlorid, Chloroform, Kohlenstofftetrachlorid, Ethylenchlorid, Trichloroethylen und Chlorbenzol ; Ether wie Diethylether, Methylethylether, Diisopropylether, Dibutylether, Propylenoxid, Dioxan und Tetrahydrofuran ; Ketone wie Aceton, Methylethylketon, Methylisopropylketon und Methylisobutylketon ; Nitrile wie Acetonitril, Propionitril und Acrylnitril ; tertiäre Alkohole wie tert-Butylalkohol ; Ester wie Ethylacetat und Amylacetat ; Säureamide wie Dimethylformamid und Dimethylacetamid ; Sulfone und Sulfoxide wie Dimethylsulfoxid und Sulfolan ; sowie Basen wie Pyridin.

Die Reaktion (i) gemäß der vorliegenden Erfindung kann in Gegenwart eines säurebindenden Mittels durchgeführt werden. Beispiele für das säurebindende Mittel sind die Hydroxide, Carbonate, Hydrogencarbonate und Alkoholate von Alkalimetallen sowie tertiäre Amine (z. B. Triethylamin, Diethylanilin, Dimethylanilin und Pyridin), die allgemein verwendet werden.

Das Verfahren gemäß der vorliegenden Erfindung kann innerhalb eines weiten Bereichs der Temperatur durchgeführt werden. Beispielsweise kann es bei einer Temperatur zwischen etwa 0 °C und etwa 150 °C, vorzugsweise zwischen etwa 10 °C und etwa 70 °C durchgeführt werden. Zweckmäßigerweise wird die Reaktion unter atmosphärischem Druck durchgeführt, jedoch ist es auch möglich, unter erhöhtem oder vermindertem Druck zu arbeiten.

Verfahren ii)

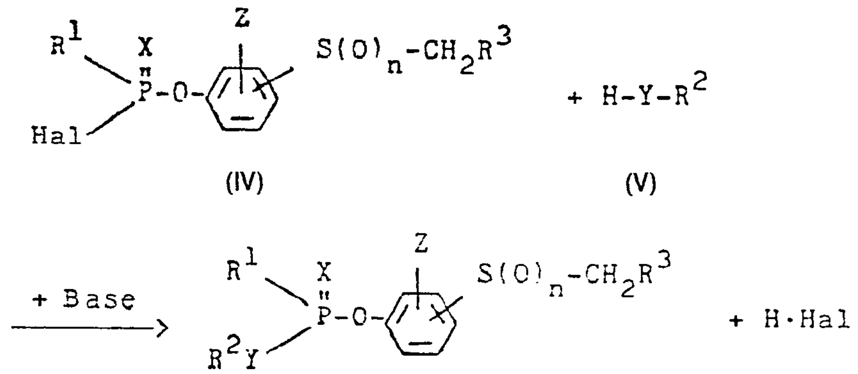


(IV) (V)

(I)

In den vorstehenden Formeln haben R¹, R², R³, X, Y, Z, n und Hal die im Vorstehenden angegebenen Bedeutungen.

In dem vorstehenden Reaktionsschema können Beispiele für R¹, R², R³, X, Y, Z, n und Hal die gleichen sein, die im Vorstehenden für das Verfahren i) beispielhaft angegeben sind.

Zu speziellen Beispielen für die Verbindung der allgemeinen Formel (IV) in dem vorstehenden Reaktionsschema zählen

O-[4-(β,β,β-Trifluoroethylthio)phenyl]methanthiophosphonylchlorid,
O-[4-(β,β,β-Trifluoroethylthio)phenyl]ethanthiophosphonylchlorid,
O-[4-(β,β,β-Trifluoroethylthio)phenyl]benzolthiophosphonylchlorid,
O-[4-(β,β,β-Trifluoroethylthio)phenyl]methanphosphonylchlorid,
O-[4-(β,β,γ,γ-Tetrafluoropropylsulfonyl)phenyl]-methanthiophosphonylchlorid,
O-[2-(β,β,β-Trifluoroethylthio)phenyl]methanthiophosphonylchlorid,
O-[2-(β,β,γ,γ-Tetrafluoropropylthio)phenyl]-methanthiophosphonylchlorid,
O-[4-(β,β,β-Trifluoroethylsulfonyl)phenyl]-methanthiophosphonylchlorid,
O-[4-(β,β,γ,γ-Tetrafluoropropylthio)phenyl]-methanthiophosphonylchlorid,
O-[4-(β,β,γ,γ,γ-Pentafluoropropylthio)phenyl]-methanthiophosphonylchlorid und
O-[3-Methyl-4-(β,β,β-trifluoroethylthio)phenyl]-methanthiophosphonylchlorid.

Die entsprechenden Bromide können ebenfalls als Beispiele genannt werden.

Spezielle Beispiele für die Verbindung der allgemeinen Formel (V), die in gleicher Weise ein Ausgangsmaterial ist, sind Ethylalkohol, Methylalkohol, Methylamin, Isopropylamin, Dimethylamin, Propanthiol und 2-Ethoxyethanthiol.

Beispiele für die in der vorstehenden Reaktion verwendete Base können die gleichen sein, wie sie im Vorstehenden im Hinblick auf das Verfahren i) angeführt sind.

Das vorerwähnte Herstellungsverfahren wird anhand eines typischen Beispiels im einzelnen erläutert.

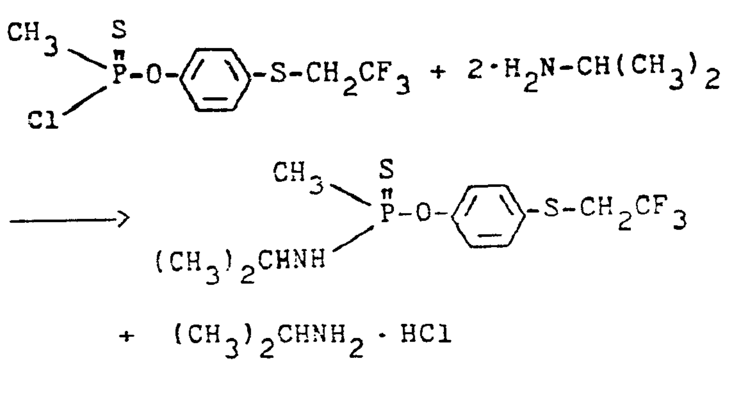


Das vorstehende Verfahren (ii) kann bei einer Temperatur innerhalb eines weiten Bereichs in einem inerten Lösungsmittel oder Verdünnungsmittel durchgeführt werden. Beispiele für das Lösungs- oder

Verdünnungsmittel sind die gleichen, wie sie im Vorstehenden im Hinblick auf das Verfahren i) angeführt sind ; sie umfassen auch Alkohole wie Methanol, Ethanol und Isopropanol. Die Reaktion kann beispielsweise bei einer Temperatur zwischen etwa 0 °C und etwa 150 °C, vorzugsweise zwischen etwa 10 °C und etwa 70 °C, durchgeführt werden. Zweckmäßigerweise wird die Reaktion unter atmosphärischem Druck durchgeführt, jedoch ist es auch möglich, unter erhöhtem oder vermindertem Druck zu arbeiten.

In dem obigen Verfahren (ii) können die Verbindungen der allgemeinen Formel (IV) als Ausgangsmaterialien beispielsweise mittels des nachstehenden Verfahrens erzeugt werden.

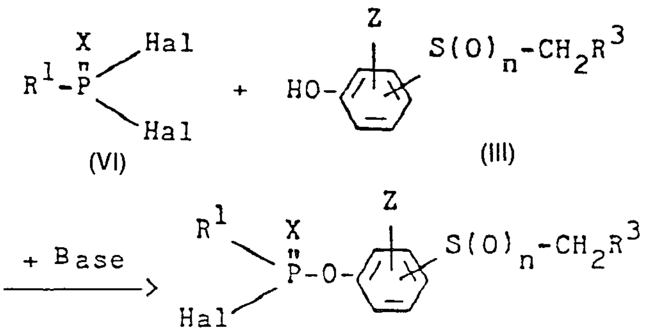

(VI) (III)

(IV)

In den vorstehenden Formeln haben $R^1$, $R^3$, X, Z, n und Hal die im Vorstehenden angegebenen Bedeutungen.

Spezielle Beispiele für die Verbindungen der allgemeinen Formel (IV) in dem vorstehenden Reaktionsschema sind Methanthiophosphonyldichlorid, Ethanthiophosphonyldichlorid und Benzolthiophosphonyldichlorid.

Spezielle Beispiele für die Verbindungen der allgemeinen Formel (III), die Ausgangsmaterialien sind, können die gleichen sein, die im Vorstehenden im Hinblick auf das Verfahren i) angeführt sind.

Spezielle Beispiele für die in der vorstehenden Reaktion verwendete Base sind ebenfalls die gleichen, wie sie im Vorstehenden angeführt sind.

Das vorerwähnte Herstellungsverfahren wird anhand eines typischen Beispiels im einzelnen erläutert.

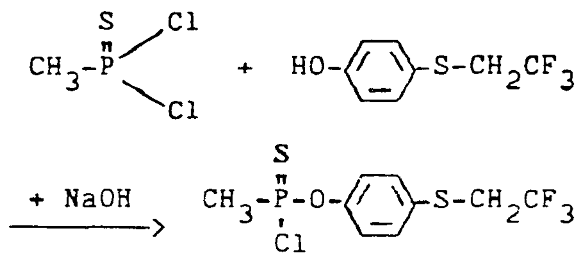


Das vorstehende Verfahren zur Herstellung der Verbindung der allgemeinen Formel (IV) kann in einfacher Weise unter den gleichen Bedingungen wie bei dem obigen Verfahren (ii) durchgeführt werden.

Verbindungen der allgemeinen Formel (I), in denen n = 2 ist, können auch mittels des folgenden Verfahrens hergestellt werden.

Verfahren iii)

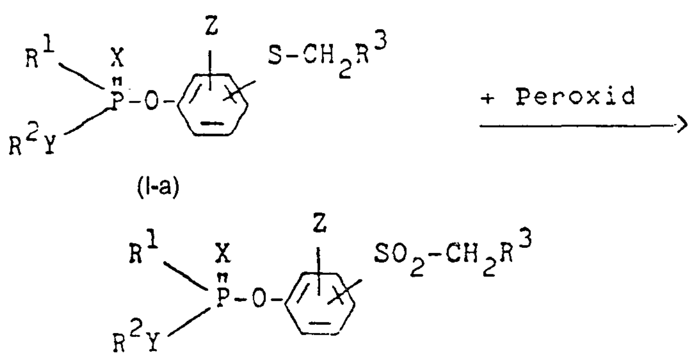

(I-a)

(I-b)

In den Formeln haben $R^1$, $R^2$, $R^3$, X, Y und Z die im Vorstehenden angegebenen Bedeutungen.

Beispiele für $R^1$, $R^2$, $R^3$, X, Y und Z in dem vorstehenden Reaktionsschema sind die gleichen, die oben beispielhaft angegeben sind.

Die Verbindungen der allgemeinen Formel (I-a) in dem vorstehenden Reaktionsschema sind in den Verbindungen der Formel (I) gemäß der vorliegenden Erfindung enthalten. Ein Beispiel hierfür ist O-Ethyl-O-[4-(β,β,β-Trifluoroethylthio)phenyl] methanthiophosphonat.

Spezielle Beispiele für das Peroxid in dem obigen Reaktionsschema sind m-Chloroperbenzoesäure und Hydrogenperoxid.

Das vorstehende Verfahren kann bei einer Temperatur innerhalb eines weiten Bereichs unter Verwendung der gleichen inerten Lösungsmittel oder Verdünnungsmittel, wie sie im Vorstehenden beispielhaft angegeben sind, durchgeführt werden. Die Reaktion kann allgemein bei einer Temperatur von etwa 0 °C bis etwa 150 °C, vorzugsweise zwischen etwa 10 °C und etwa 70 °C, durchgeführt werden. Zweckmäßigerweise wird die Reaktion unter atmosphärischem Druck durchgeführt, jedoch ist es auch möglich, unter erhöhtem oder vermindertem Druck zu arbeiten.

Für den Einsatz als insektizides, mitizides und nematizides Mittel können die aktiven Verbindungen gemäß der vorliegenden Erfindung als solche direkt nach dem Verdünnen mit Wasser angewandt oder vorher zu verschiedenen Wirkstoffpräparaten formuliert werden, wie sie unter Verwendung landwirtschaftlich unbedenklicher Hilfsstoffe durch Verfahren gewonnen werden, die bei der praktischen Herstellung von Agrochemikalien allgemein angewandt werden. Im praktischen Gebrauch werden diese verschiedenen Formulierungen entweder unmittelbar oder nach dem Verdünnen mit Wasser auf die gewünschte Konzentration eingesetzt.

Beispiele für die landwirtschaftlich unbedenklichen Hilfsstoffe sind Verdünnungsmittel (Lösungsmittel, Streckmittel, Träger), oberflächenaktive Mittel (Lösungsvermittler, Emulgatoren, Dispergiermittel, Netzmittel), Stabilisatoren, Haftmittel, Aerosol-Treibmittel und synergistische Mittel.

Beispiele für die Lösungsmittel sind Wasser und organische Lösungsmittel, beispielsweise Kohlenwasserstoffe [z. B. n-Hexan, Petrolether, Naphtha, Erdöl-Fraktionen (z. B. Paraffinwachse, Kerosin, Leichtöle, Mittelöle und Schweröle), Benzol, Toluol und Xylole], halogenierte Kohlenwasserstoffe (z. B. Methylenchlorid, Kohlenstofftetrachlorid, Trichloroethylen, Ethylenchlorid, Ethylendibromid, Chlorbenzol und Chloroform), Alkohole (z. B. Methylalkohol, Ethylalkohol, Propylalkohol und Ethylenglycol), Ether (z. B. Ethylether, Ethylenoxid und Dioxan), Alkohol-ether (z. B. Ethylenglycol-monomethylether), Ketone (z. B. Aceton und Isophoron), Ester (z. B. Ethylacetat und Amylacetat), Amide (z. B. Dimethylformamid und Dimethylacetamid) und Sulfoxide ( z. B. Dimethylsulfoxid).

Beispiele für die Streckmittel oder Träger umfassen anorganische Pulver, beispielsweise Löschkalk, Magnesiumkalk, Gips, Calciumcarbonat, Siliciumdioxid, Perlit, Bimsstein, Calcit, Diatomeenerde, amorphes Siliciumdioxid, Aluminiumoxid, Zeolithe und Tonminerale (z. B. Pyrophyllit, Talkum, Montmorillonit, Beidellit, Vermikulit, Kaolinit und Glimmer), pflanzliche Pulver wie beispielsweise Getreidepulver, Stärkearten, verarbeitete Stärkearten, Zucker, Glucose und zerkleinerte Stengel von Pflanzen, sowie Pulver aus synthetischen Harzen wie Phenol-Harzen, Harnstoff-Harzen und Vinylchlorid-Harzen.

Beispiele für die oberflächenaktiven Mittel umfassen anionische oberflächenaktive Mittel wie Alkylschwefelsäureester (z. B. Natriumlaurylsulfat), Arylsulfonsäure-Salze (z. B. Alkylarylsulfonsäure-Salze und Natriumalkylnaphthalinsulfonate), Bernsteinsäure-Salze und Salze von Schwefelsäureestern von Polyethylenglycol-alkyl-arylethern, kationische oberflächenaktive Mittel wie Alkylamine (z. B. Laurylamin, Stearyltrimethylammoniumchlorid und Alkyldimethylbenzylammoniumchlorid) und Polyoxyethylenalkylamine, nicht-ionische oberflächenaktive Mittel wie Polyoxyethylenglycolether (z. B. Polyoxyethylenalkylarylether und deren Kondensationsprodukte), Polyoxyethylenglycolester (z. B. Polyoxyethylenfettsäureester) und Ester mehrwertiger Alkohole (z. B. Polyoxyethylensorbitan-monolaurat) sowie amphotere oberflächenaktive Mittel.

Beispiele für andere Hilfsstoffe umfassen Stabilisatoren, Haftmittel (z. B. landwirtschaftliche Seifen, Casein-Kalk, Natriumalginat, Polyvinylalkohol, Haftmittel vom Vinylacetat-Typ und Acryl-Haftmittel), Aerosol-Treibmittel (z. B. Trichlorofluoromethan, Dichlorofluoromethan, 1,2,2-Trichloro-1,1,2-trifluoroethan, Chlorbenzol, verflüssigtes Erdgas (LNG) und niedere Ether), die Verbrennung steuernde Mittel für Räucherung und Begasung (z. B. Nitrite, Zink-Pulver und Dicyandiamid), sauerstoff-abgebende Mittel (z. B. Chlorate und Dichromate), die Phytotoxizität senkende Mittel (z. B. Zinksulfat, Eisen(II)-chlorid und Kupfersulfat), wirkungsverlängernde Mittel, Dispersions-Stabilisatoren (z. B. Casein, Tragant, Carboxymethylcellulose und Polyvinylalkohol) und synergistische Mittel.

Die Verbindungen der vorliegenden Erfindung können mittels der allgemein auf dem Gebiet der Agrochemikalien gebräuchlichen Verfahren zu verschiedenen Präparaten formuliert werden. Beispiele für solche Anwendungsformen sind emulgierbare Konzentrate, Öle, benetzbare Pulver, lösliche Pulver, Suspensionen, Stäubemittel, Granulat, pulvrige Mittel, Räuchermittel, Tabletten, Aerosole, Pasten und Kapseln.

Das insektizide, mitizide oder nematizide Mittel gemäß der vorliegenden Erfindung kann etwa 0,1 bis etwa 95 Gew.-%, vorzugsweise etwa von 0,5 bis 90 Gew.-% des vorerwähnten Wirkstoffes enthalten.

Für den praktischen Gebrauch beträgt die geeignete Menge der aktiven Verbindung in den vorgenannten Mitteln in ihren verschiedenen Formen und gebrauchsfertigen Präparaten beispielsweise etwa 0,000 1 bis etwa 20 Gew.-%, vorzugsweise etwa 0,005 bis etwa 10 Gew.-%.

Der Gehalt des Wirkstoffs kann in geeigneter Weise je nach der Art der Formulierung, dem Verfahren, Zweck, der Zeit und dem Ort seiner Anwendung, dem Zustand des Auftretens der zu bekämpfenden Schädlinge variiert werden.

Erforderlichenfalls können die Verbindungen gemäß der vorliegenden Erfindung weiterhin auch in Kombination mit anderen Agrochemikalien verwendet werden, beispielsweise mit anderen Insektiziden, Fungiziden, anderen Mitiziden, anderen Nematiziden, Anti-Virus-Mitteln, Herbiziden, Pflanzen-Wachstumsregulatoren und Lockstoffen [z. B. Organophosphatester-Verbindungen, Carbamat-Verbindungen, Dithio (oder thiol) carbamat-Verbindungen, Organochlor-Verbindungen, Dinitro-Verbindungen, organischen Schwefel- oder metallorganische Verbindungen, Antibiotika, substituierten Diphenylether-Verbindungen, Harnstoff-Verbindungen und Triazin-Verbindungen] und/oder Düngemitteln.

Den im Vorstehenden bezeichneten Wirkstoff enthaltende verschiedenartige Mittel und gebrauchsfertige Präparate können mittels verschiedener Verfahren zur Anwendung gebracht werden, wie sie allgemein für das Aufbringen von Agrochemikalien gebräuchlich sind, beispielsweise durch Sprühen (Versprühen von Flüssigkeiten, Vernebeln, Zerstäuben, Stäuben, Streuen von Granulat, Wasser-Oberflächenbehandlung und Gießen), Räuchern und Begasen, Bodenbehandlung (Vermischen mit dem Boden, Spritzen, Bedampfen und Einspritzen), Oberflächen-Anwendung (z. B. Beschichten, Aufbringen in Form von Bändern, Beschichten mit Staub und Bedecken) und Eintauchen. Sie können auch mittels des sogenannten Ultra-Low-Volume-Sprühverfahrens aufgebracht werden. Nach diesem Verfahren kann der Wirkstoff sogar in einer Konzentration von 95 % eingearbeitet sein.

Die Aufwandmenge pro Flächeneinheit beträgt etwa 0,03 bis etwa 10 kg/ha, vorzugsweise etwa 0,3 bis etwa 6 kg/ha. In besonders gelagerten Fällen können oder sollten sogar die Aufwandmengen außerhalb des angegebenen Bereichs liegen.

Gemäß der vorliegenden Erfindung kann ein insektizides, mitizides oder nematizides Mittel zur Verfügung gestellt werden, das als Wirkstoff die Verbindung der allgemeinen Formel (I) sowie ein Verdünnungsmittel (ein Lösungsmittel und/oder ein Streckmittel und/oder einen Träger) und/oder ein oberflächenaktives Mittel und, falls weiterhin erforderlich, einen Stabilisator, ein Haftmittel, ein synergistisches Mittel enthält.

Die vorliegende Erfindung macht weiterhin ein Verfahren zur Bekämpfung von Insekten, Milben und Nematoden verfügbar, das darin besteht, daß eine Verbindung der allgemeinen Formel (I) allein oder in Form einer Mischung mit einem Verdünnungsmittel (einem Lösungsmittel) und/oder einem Streckmittel und/oder einem Träger) und/oder einem oberflächenaktiven Mittel und, falls weiterhin erforderlich, einem Stabilisator, einem Haftmittel, einem synergistischen Mittel auf Insekten, Milben und Nematoden und/oder ihren Lebensraum aufgebracht wird.

Die vorliegende Erfindung wird durch die folgenden Beispiele im einzelnen erläutert, ist jedoch nicht auf diese beschränkt.

Beispiel 1

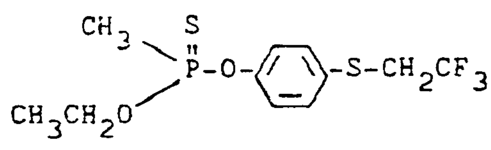

(Verbindung Nr. 1)

Während eine Mischung aus 4,16 g 4-(β,β,β-Trifluoro-ethylthio)phenol, 2,8 g wasserfreiem Kaliumcarbonat und 50 ml Methylisobutylketon gerührt wurde, wurden 3,17 g O-Ethylmethanthiophosphonylchlorid tropfenweise zu der Mischung hinzugefügt. Während dieser Zeit wurde die Temperatur der Reaktionsmischung auf 20 °C bis 30 °C gehalten. Nachdem die Mischung 2 h bei 20 °C bis 30 °C gerührt worden war, wurde die Temperatur der Mischung auf 55 °C bis 60 °C gesteigert, und die Mischung wurde weitere 4 h gerührt. Die Reaktionsmischung wurde auf Raumtemperatur abgekühlt, mit einer 1-proz. wäßrigen Natriumhydroxid-Lösung und mit Wasser in dieser Reihenfolge gewaschen und danach über wasserfreiem Natriumsulfat getrocknet. Das Lösungsmittel und die niedrigsiedenden Substanzen wurden unter vermindertem Druck abdestilliert, wonach 6,14 g O-Ethyl-O-[4-(β,β,β-trifluoroethylthio)phenyl]methanthiophosphonat erhalten wurden. $n_D^{20}$ = 1,521 0.

Bezugsbeispiel

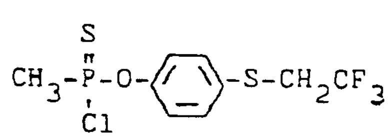

(Zwischenprodukt)

Eine Lösung aus 8,8 g Natriumhydroxid, 26 ml Wasser und 41,6 g 4-(β,β,β-Trifluoroethylthio)phenol wurde tropfenweise bei 5 °C bis 10 °C zu 31,3 g Methanthiophosphonylchlorid hinzugefügt, das heftig gerührt wurde. Nachdem das Rühren 30 min durchgeführt worden war, wurden 300 ml Toluol zugesetzt, und die Mischung wurde eine Weile gerührt. Die Toluol-Schicht wurde abgetrennt, mit einer gekühlten, 1-proz. wäßrigen Natriumhydroxid-Lösung und Eiswasser in dieser Reihenfolge gewaschen und danach über Calciumchlorid getrocknet. Das Toluol wurde abdestilliert, und der Rückstand wurde unter vermindertem Druck destilliert, worauf 48 g O-[4-(β,β,β-Trifluoroethylthio)phenyl] methanthiophosphonylchlorid erhalten wurden. Sdp. 146-148 °C bei 0,93 mbar (0,7 mmHg).

Beispiel 2

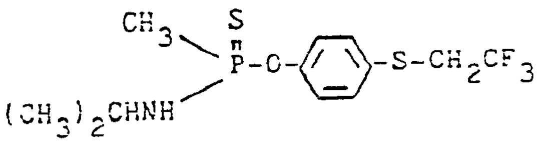

(Verbindung Nr. 6)

Isopropylamin (1,3 g) wurde tropfenweise bei 0 °C bis 10 °C zu einer Lösung aus 3,2 g O-[4-(β,β,β-Trifluoro-ethylthio)phenyl] methanthiophosphonylchlorid und 20 ml Toluol hinzugefügt. Die Mischung wurde 3 h bei Raumtemperatur gerührt und mit 1-proz. Salzsäure und Wasser in dieser Reihenfolge gewaschen. Die Toluol-Schicht wurde über wasserfreiem Natriumsulfat getrocknet. Das Toluol wurde abgedampft, und der Rückstand wurde unter vermindertem Druck destilliert, wonach 1,8 g N-Isopropyl-O-[4-(β,β,β-trifluoroethylthio)-phenyl] methanthiophosphonamidester erhalten wurden. Sdp. 173-176 °C bei 0,8 mbar (0,6 mmHg). $n_D^{20}$ = 1,536 8.

Die Verbindungen Nr. 2, 3, 4 und 5 wurden im wesentlichen in der gleichen Weise wie in Beispiel 1 hergestellt, und die Verbindungen Nr. 7, 8 und 9 wurden im wesentlichen in der gleichen Weise wie in Beispiel 2 hergestellt. Die Ergebnisse sind in der Tabelle 1 aufgeführt.

(Siehe Tabelle 1/2 Seite 12 ff.)

Tabelle 1/2

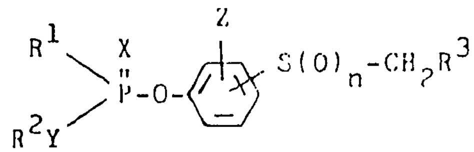

| Verbindung Nr. | $R^1$ | $R^2$ | $-S(O)_n-CH_2R^3$ | X | Y | Z | Physikal. Konstante $n_D^{20}$ |
|---|---|---|---|---|---|---|---|
| 2 | $-CH_2CH_3$ | $-CH_2CH_3$ | $4-S-CH_2CF_3$ | S | O | H | 1.5180 |
| 3 | 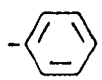 | $-CH_2CH_3$ | $4-S-CH_2CF_3$ | S | O | H | 1.5573 |
| 4 | $-CH_3$ | $-CH_2CH_3$ | $4-S-CH_2CF_3$ | S | O | $3-CH_3$ | 1.5240 |
| 5 | $-CH_3$ | $-CH_3$ | $4-S-CH_2CF_3$ | S | -NH | H | 1.5496 |
| 7 | $-CH_3$ | $-CH_3$ | $4-S-CH_2CF_3$ | S | $-N-CH_3$ | H | 1.5402 |
| 8 | $-CH_3$ | $-C_3H_7-n$ | $4-S-CH_2CF_3$ | S | S | H | 1.5560 |
| 9 | $-CH_3$ | $-C_2H_4OC_2H_5$ | $4-S-CH_2CF_3$ | S | S | H | 1.5454 |

Tabelle 1/2 (Forts.)

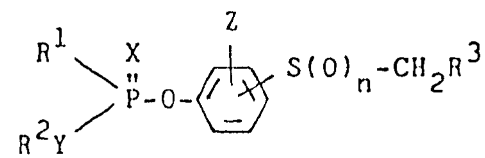

| Verbindung Nr. | $R^1$ | $R^2$ | $-S(O)_n-CH_2R^3$ | X | Y | Z |
|---|---|---|---|---|---|---|
| 10 | $-CH_3$ | $-CH_2CH_3$ | $4-S-CH_2CF_3$ | O | O | H |
| 11 | $-CH_3$ | $-CH_2CH_3$ | $2-S-CH_2CF_3$ | S | O | H |
| 12 | $-CH_3$ | $-CH_2CH_3$ | $4-SO_2-CH_2CF_3$ | S | O | H |
| 13 | $-CH_3$ | $-CH_2CH_3$ | $4-S-CH_2-CF_2-CHF_2$ | S | O | H |
| 14 | $-CH_3$ | $-CH_2CH_3$ | $4-S-CH_2-CF_2-CF_3$ | S | O | H |
| 15 | $-CH_3$ | $-C_3H_7-n$ | $4-S-CH_2CF_3$ | S | S | H |

Beispiel 3

Benetzbares Pulver.

15 Teile der Verbindung Nr. 1 der Erfindung, 80 Teile eines Gemisches (1 : 5) aus Weißruß (feinpulvrigem wasserhaltigen amorphen Siliciumdioxid) und Tonpulver, 2 Teile Natriumalkylbenzolsulfonat und 3 Teile Natriumalkylnaphthalinsulfonat/Formaldehyd-Kondensat werden pulverisiert und zu einem benetzbaren Pulver vermischt. Dieses wird mit Wasser verdünnt und auf Insekten, Milben oder Nematoden und/oder ihren Lebensraum aufgesprüht.

Beispiel 4

Emulgierbares Konzentrat.

30 Teile der Verbindung Nr. 2 der Erfindung, 55 Teile Xylol, 8 Teile Polyoxyethylen-alkylphenylether und 7 Teile Calciumalkylbenzolsulfonat werden unter Rühren miteinander vermischt, wodurch ein emulgierbares Konzentrat hergestellt wird. Dieses wird mit Wasser verdünnt und auf Insekten, Milben oder Nematoden und/oder ihren Lebensraum aufgesprüht.

Beispiel 5

Stäubemittel.

2 Teile der Verbindung Nr. 3 der Erfindung und 98 Teile Tonpulver wurden pulverisiert und gemischt, wodurch ein Stäubemittel hergestellt wird. Dieses wird über Insekten, Milben oder Nematoden und/oder ihrem Lebensraum ausgestreut.

Beispiel 6

Stäubemittel.

Die Verbindung Nr. 4 der Erfindung (1,5 Teile), 0,5 Teile Isopropylhydrogenphosphat und 98 Teile Tonpulver wurden pulverisiert und gemischt, wodurch ein Stäubemittel hergestellt wurde. Dieses wird über Insekten, Milben oder Nematoden und/oder ihrem Lebensraum ausgestreut.

Beispiel 7

Granulat.

Wasser (25 Teile) wird zu einer Mischung aus 10 Teilen der Verbindung Nr. 5 der Erfindung, 30 Teilen Bentonit (Montmorillonit), 58 Teilen Talkum und 2 Teilen Ligninsulfonat zugesetzt, und das Gemisch wird gut geknetet. Die Mischung wird mittels eines Extruder-Granulators zu einem Granulat mit einer Korngröße von 0,43 bis 2,0 mm (10 bis 40 mesh) verarbeitet und bei 40 °C bis 50 °C getrocknet, wodurch ein Granulat gebildet wird. Das Granulat wird über Insekten, Milben oder Nematoden und/oder ihrem Lebensraum ausgestreut.

Beispiel 8

Granulat.

Ein Drehmischer wird mit 95 Teilen Tonmineral-Teilchen mit einer Teilchengrößen-Verteilung zwischen 0,2 und 2 mm beschickt, und unter Drehen des Mischers werden 5 Gew.-Teile der Verbindung Nr. 6 der Erfindung zur gleichmäßigen Benetzung unter Bildung eines Granulats auf die Tonmineral-Teilchen aufgesprüht. Das Granulat wird über Insekten, Milben oder Nematoden und/oder ihrem Lebensraum ausgestreut.

Beispiel 9

Öl.

Die Verbindung Nr. 7 der Erfindung (0,5 Teile) und 99,5 Teile Kerosin werden unter Rühren miteinander vermischt, wodurch ein Öl gebildet wird. Dieses wird auf Insekten, Milben oder Nematoden und/oder ihren Lebensraum aufgesprüht.

Beispiel 10

Test mit Callosobruchus chinensis :

Herstellung eines Test-Präparats :
Lösungsmittel : Xylol — 3 Gew.-Teile
Emulgator : Polyoxyethylen-alkylphenylether — 1 Gew.-Teil

Zur Herstellung eines Test-Präparats wurde 1 Gew.-Teil der betreffenden aktiven Verbindung mit der oben bezeichneten Menge Lösungsmittel, das die oben angegebene Menge Emulgator enthielt, vermischt, und die Mischung wurde mit Wasser auf eine vorher festgesetzte Konzentration verdünnt.

Test-Verfahren :

Ein Filterpapier wurde jeweils auf dem Boden einer Petrischale von 9 cm Durchmesser ausgebreitet, und 1 ml einer wäßrigen Verdünnung der aktiven Verbindung mit einer vorbestimmten Konzentration wurde jeweils in eine Schale gegeben. 20 Exemplare von Callosobruchus chinensis wurden eingesetzt, und die Petrischalen wurden in einen Raum mit einer konstanten Temperatur von 28 °C gestellt. Nach 24 h wurde die Zahl der toten Insekten bestimmt und das Vernichtungsverhältnis berechnet.
Die Ergebnisse sind in der Tabelle 3 aufgeführt.

Tabelle 3

| Verbindung Nr. | Wirkstoff-Konzentration ppm | Vernichtungsverhältnis % |
|---|---|---|
| 1 | 1 | 100 |
| 2 | 1 | 100 |
| 3 | 1 | 100 |
| 4 | 1 | 100 |
| Vergleichs-Verbindung | | |
| A - 1 | 10 | 60 |
| | 1 | 0 |

Anmerkung : Vergleichs-Verbindung

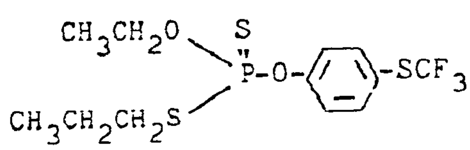

(Verbindung beschrieben in der US-PS 4 139 615).

Beispiel 11

Test mit der Stubenfliege (Musca domestica) :

Test-Verfahren :

Ein Filterpapier wurde jeweils auf dem Boden einer Petrischale von 9 cm Durchmesser ausgebreitet, und 1 ml einer wie in Beispiel 10 hergestellten wäßrigen Verdünnung der aktiven Verbindung mit einer vorbestimmten Konzentration wurde jeweils in eine Schale gegeben. 10 ausgewachsene weibliche Exemplare von Musca domestica, die gegen handelsübliche Organophosphat-Mittel resistent waren,

wurden in die Schale eingesetzt. Die Schalen wurden in einen Raum mit einer konstanten Temperatur von 29 °C gestellt. Nach 24 h wurde die Zahl der toten Insekten bestimmt und das Vernichtungsverhältnis berechnet.

Die Ergebnisse sind in der Tabelle 4 aufgeführt.

Tabelle 4

| Verbindung Nr. | Wirkstoff-Konzentration ppm | Vernichtungs-verhältnis % |
|---|---|---|
| 1 | 10 | 100 |
| 2 | 10 | 100 |
| 4 | 10 | 100 |
| 8 | 10 | 100 |
| Vergleichs-Verbindung | | |
| A - 1 | 100 | 0 |

Anmerkung zu Tabelle 4 : Die Vergleichs-Verbindung ist die gleiche wie in der Tabelle 3.

Beispiel 12

Test mit Tetranychus telarius :

Test-Verfahren :

50 bis 100 ausgewachsene Exemplare von Tetranychus telarius, die gegen Organophosphor-Mittel resistent waren, wurden auf den Blättern von Gartenerbsen im Stadium der Entwicklung von 2 Haupt-Blättern ausgesetzt, die in Töpfen mit einem Durchmesser von 6 cm gezogen worden waren. Nach 2 Tagen wurde eine wie in Beispiel 10 hergestellte wäßrige Verdünnung der aktiven Verbindung in einer Menge von 40 ml je Topf gesprüht. Die Töpfe wurden in ein Gewächshaus gestellt, und nach 10 Tagen wurde die Bekämpfungswirkung mit Hilfe der nachstehend bezeichneten Kontroll-Indices bewertet :

3 : Anteil der überlebenden ausgewachsenen Insekten : 0 % ;
2 : Anteil der überlebenden ausgewachsenen Insekten : mehr als 0 % und weniger als 5 %, bezogen auf eine unbehandelte Fläche ;
1 : Anteil der überlebenden ausgewachsenen Insekten : 5 bis 50 %, bezogen auf die unbehandelte Fläche ;
0 : Anteil der überlebenden ausgewachsenen Insekten : mehr als 50 %, bezogen auf die unbehandelte Fläche.

Die Ergebnisse sind in der Tabelle 5 aufgeführt.

Tabelle 5

| Verbindung Nr. | Wirkstoff-Konzentration ppm | Kontroll-Index |
|---|---|---|
| 1 | 100 | 3 |
| 2 | 100 | 3 |
| 9 | 100 | 3 |
| Vergleichs-Verbindung | | |
| A - 1 | 100 | 0 |

Beispiel 13

Test mit der deutschen Schabe (Blatella Germanica) :

Test-Verfahren :

Ein Filterpapier wurde jeweils auf den Boden einer Petrischale von 9 cm Durchmesser gelegt, und 1 ml einer wäßrigen Verdünnung einer aktiven Verbindung mit einer vorbestimmten Konzentration, die wie in Beispiel 10 hergestellt wurde, wurde hinzugegeben. 10 ausgewachsene Exemplare von Blatella Germanica wurden in die Schale eingesetzt. Die Schalen wurden in einen Raum mit einer konstanten Temperatur von 28 °C gestellt. Nach 24 h wurde die Zahl der toten Insekten bestimmt und das Vernichtungsverhältnis berechnet.

Die Ergebnisse sind in der Tabelle 6 aufgeführt.

Tabelle 6

| Verbindung Nr. | Wirkstoff-Konzentration ppm | Vernichtungs-verhältnis % |
|---|---|---|
| 1 | 10 | 100 |
| 2 | 10 | 100 |
| 3 | 100 | 100 |
| 4 | 10 | 100 |
| 6 | 100 | 100 |
| Vergleichs-Verbindung | | |
| A - 1 | 100 | 10 |

Anmerkung : Die Vergleichs-Verbindung ist die gleiche wie in der Tabelle 3.

Beispiel 14

Test mit Larven von Culex pipiens :

Test-Verfahren :

100 ml einer wäßrigen Verdünnung der aktiven Verbindung mit einer vorbestimmten Konzentration, die wie in Beispiel 10 hergestellt wurde, wurden jeweils in eine tiefe Petrischale mit einem Durchmesser von 9 cm gegeben, und 25 Larven im 4. Stadium von Culex pipiens wurden in die Schale eingesetzt. Die Schale wurde in einen Raum mit konstanter Temperatur von 28 °C gestellt. Nach 24 h wurde die Zahl der toten Insekten bestimmt und das Vernichtungsverhältnis berechnet.

Die Ergebnisse sind in der Tabelle 7 aufgeführt.

(Siehe Tabelle 7 Seite 18 f.)

Tabelle 7

| Verbindung Nr. | Wirkstoff-Konzentration ppm | Vernichtungs-verhältnis % |
|---|---|---|
| 1 | 0,001 | 100 |
| 2 | 0,01 | 100 |
| 3 | 0,001 | 100 |
| 5 | 0,01 | 100 |
| 7 | 0,01 | 100 |
| Vergleichs-Verbindung | | |
| A - 1 | 0,1 | 70 |
| | 0,01 | 0 |

Anmerkung : Die Vergleichs-Verbindung ist die gleiche wie in der Tabelle 3.

Beispiel 15

Test mit Meloidogyne incognita :

Herstellung des Test-Präparats :
2 Teile der aktiven Verbindung und 98 Teile Talkum wurden pulverisiert und miteinander vermischt.

Test-Verfahren :

Das wie im Vorstehenden beschrieben hergestellte Test-Präparat wurde zu durch Meloidogyne incognita verseuchter Erde in solchen Mengen hinzugefügt, daß es in Konzentrationen von 25 und 10 ppm vorlag. Erde und Präparat wurden unter Rühren gleichmäßig miteinander vermischt und anschließend in Töpfe von 2 $dm^2$ gefüllt. In diese Mischung wurden etwa 20 Körner Tomaten-Samen (Varietät : Kurihara) pro Topf eingesät. Die Tomatenpflanzen wurden im Gewächshaus angezogen. Nach vier Wochen wurden die Tomatenpflanzen herausgezogen, ohne dabei ihre Wurzeln zu beschädigen. Der Grad der Schädigung wurde an 10 der herausgezogenen Tomatenpflanzen untersucht.

Die Test-Ergebnisse zeigen, daß die Verbindungen der vorliegenden Erfindung, beispielsweise die Verbindungen Nr. 1, 4, 5, 6 und 7, eine Bekämpfungswirkung von annähernd 100 % erzielen, wenn sie in einer Wirkstoff-Konzentration von 10 bis 25 ppm zur Anwendung gebracht werden.

**Patentansprüche**

1. Phosphonsäureester der allgemeinen Formel (I)

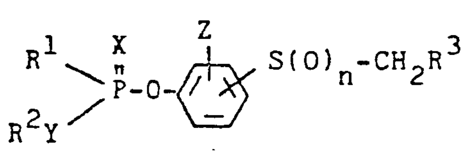 (I)

in der
$R^1$ eine $C_1$-$C_4$-Alkyl-Gruppe, die Phenyl-, α-Naphthyl- oder β-Naphthyl-Gruppe bezeichnet,
$R^2$ eine $C_1$-$C_4$-Alkyl-Gruppe oder eine $C_1$-$C_4$-Alkoxy-$C_1$-$C_4$-Alkyl-Gruppe bezeichnet,
$R^3$ eine fluor-substituierte $C_1$-$C_4$-Alkyl-Gruppe bezeichnet,
X ein Sauerstoff- oder Schwefel-Atom bezeichnet,;
Y ein Sauerstoff- oder Schwefel-Atom oder eine Gruppe der Formel

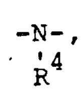

in der $R^4$ für ein Wasserstoff-Atom oder eine $C_1$-$C_4$-Alkyl-Gruppe steht, bezeichnet,
Z ein Wasserstoff-Atom, ein Halogen-Atom oder eine $C_1$-$C_4$-Alkyl-Gruppe bezeichnet und
n 0 oder 2 bezeichnet.

2. O-Ethyl-O-[4-(β,β,β-trifluoroethylthio) phenyl] methanthiophosphonat der nachstehenden Formel

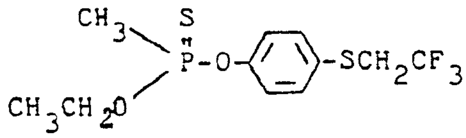

3. O-Ethyl-O-[4-(β,β,β-trifluoroethylthio)phenyl] ethanthiophosphonat der nachstehenden Formel

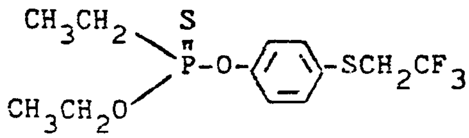

4. O-Ethyl-O-[4-(β,β,β-trifluoroethylthio)phenyl] benzolthiophosphonat der nachstehenden Formel

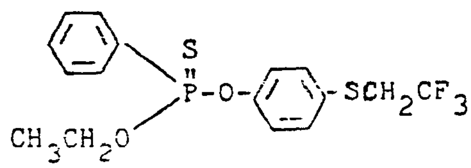

5. N-Isopropyl-O-[4-(β,β,β-trifluoroethylthio)phenyl]-methanthiophosphonamidester der nachstehenden Formel

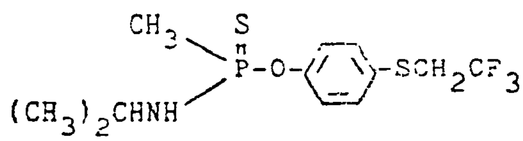

6. S-(2-Ethoxyethyl-O-[4-(β,β,β-trifluoroethylthio)phenyl] methandithiophosphonat der nachstehenden Formel

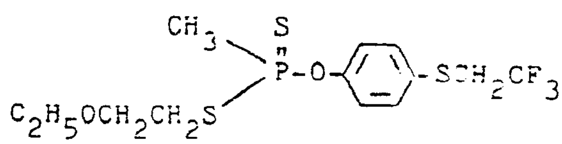

7. Verfahren zur Herstellung eines Phosphonsäureesters der allgemeinen Formel (I)

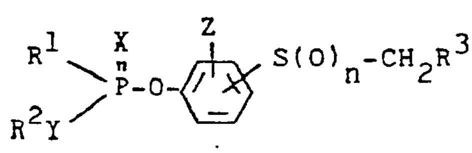
(I)

in der
$R^1$ eine $C_1$-$C_4$-Alkyl-Gruppe, die Phenyl-, α-Naphthyl- oder β-Naphthyl-Gruppe bezeichnet,
$R^2$ eine $C_1$-$C_4$-Alkyl-Gruppe oder eine $C_1$-$C_4$-Alkoxy-$C_1$-$C_4$-Alkyl-Gruppe bezeichnet,
$R^3$ eine fluor-substituierte $C_1$-$C_4$-Alkyl-Gruppe bezeichnet,
X ein Sauerstoff- oder Schwefel-Atom bezeichnet,
Y ein Sauerstoff- oder Schwefel-Atom oder eine Gruppe der Formel

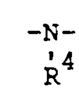

in der $R^4$ für ein Wasserstoff-Atom oder eine $C_1$-$C_4$-Alkyl-Gruppe steht, bezeichnet,

Z ein Wasserstoff-Atom, ein Halogen-Atom oder eine $C_1$-$C_4$-Alkyl-Gruppe bezeichnet und n 0 oder 2 bezeichnet,

dadurch gekennzeichnet, daß

(i) eine Verbindung der allgemeinen Formel (II)

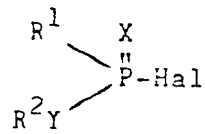

(II)

in der $R^1$, $R^2$, X und Y die im Vorstehenden angegebenen Bedeutungen haben und Hal ein Halogen-Atom bezeichnet, mit einer Verbindung der allgemeinen Formel (III)

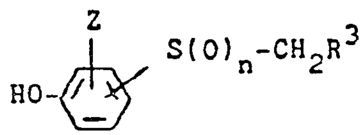

(III)

in der $R^3$, Z und n die im Vorstehenden angegebenen Bedeutungen haben, in Gegenwart einer Base umgesetzt wird oder

(ii) eine Verbindung der allgemeinen Formel (IV)

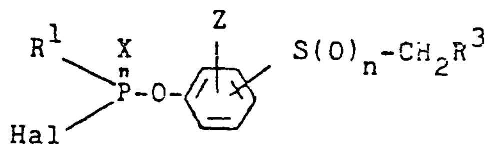

(IV)

in der $R^1$, $R^3$, X, Z, n und Hal die im Vorstehenden angegebenen Bedeutungen haben, mit einer Verbindung der allgemeinen Formel

$$H—Y—R^2 \qquad (V)$$

in der $R^2$ und Y die im Vorstehenden angegebenen Bedeutungen haben, in Gegenwart einer Base umgesetzt wird, oder

(iii) zur Herstellung von Verbindungen der Formel (I), in denen n für 2 steht, eine Verbindung der allgemeinen Formel (Ia)

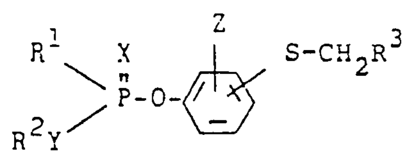

(Ia)

in der $R^1$, $R^2$, $R^3$, X, Y und Z die im Vorstehenden angegebenen Bedeutungen haben, mit einem Peroxid umgesetzt wird.

8. Insektizides, mitizides oder nematizides Mittel, enthaltend einen Phosphonsäureester der allgemeinen Formel (I) nach Anspruch 1 oder Anspruch 7.

9. Verfahren zur Bekämpfung von Schädlingen, dadurch gekennzeichnet, daß auf die Schädlinge oder deren Lebensraum eine Verbindung der allgemeinen Formel (I) nach Anspruch 1 oder Anspruch 7 aufgebracht wird.

10. Verfahren zur Herstellung einer Zusammensetzung nach Anspruch 8, dadurch gekennzeichnet, daß eine Verbindung der allgemeinen Formel (I) nach Anspruch 1 oder Anspruch 7 mit wenigstens einem inerten Verdünnungsmittel oder Träger vermischt wird.

## Claims

1. Phosphonic acid esters of the general formula (I)

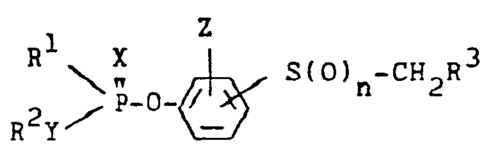

(I)

in which

$R^1$ designates a $C_1$-$C_4$-alkyl group, or the phenyl, α-naphthyl or β-naphthyl group,

$R^2$ designates a $C_1$-$C_4$-alkyl group or a $C_1$-$C_4$-alkoxy-$C_1$-$C_4$-alkyl group,

$R^3$ designates a fluorine-substituted $C_1$-$C_4$-alkyl group,

X designates an oxygen or sulphur atom,

Y designates an oxygen or sulphur atom or a group of the formula

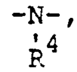

in which $R^4$ represents a hydrogen atom or a $C_1$-$C_4$-alkyl group,

Z designates a hydrogen atom, a halogen atom or a $C_1$-$C_4$-alkyl group and

n designates 0 or 2.

2. O-Ethyl-O-[4-(β,β,β-trifluoroethylthio)phenyl] methane thiophosphonate of the following formula

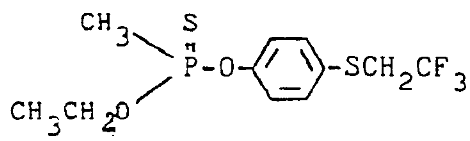

3. O-Ethyl-O-[4-(β,β,β-trifluoroethylthio)phenyl] ethane thiophosphonate of the following formula

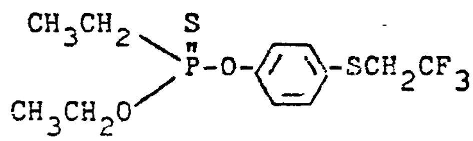

4. O-Ethyl-O-[4-(β,β,β-trifluoroethylthio)phenyl] benzene thiophosphonate of the following formula

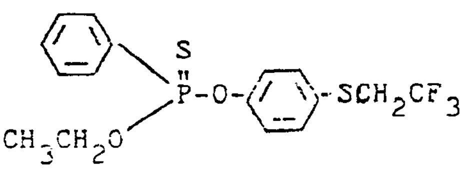

5. N-Isopropyl-O-[4-(β,β,β-trifluoroethylthio)phenyl] methane thiophosphonamide ester of the following formula

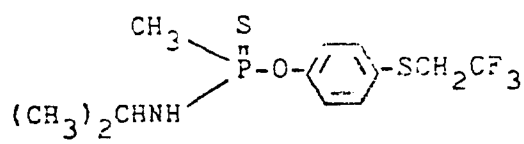

6. S-(2-Ethoxyethyl-O-[4-(β,β,β-trifluoroethylthio)phenyl] methane dithiophosphonate of the following formula

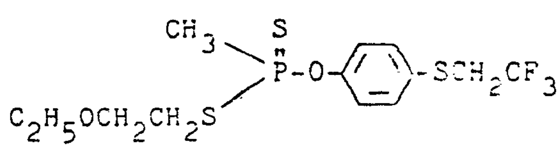

7. Process for the preparation of a phosphonic acid ester of the general formula (I)

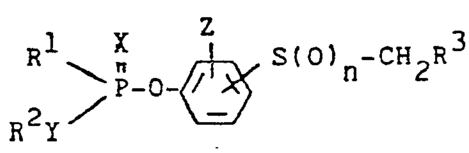

(I)

in which

$R^1$ designates a $C_1$-$C_4$-alkyl group, or the phenyl, α-naphthyl or β-naphthyl group,
$R^2$ designates a $C_1$-$C_4$-alkyl group or a $C_1$-$C_4$-alkoxy-$C_1$-$C_4$-alkyl group,
$R^3$ designates a fluorine-substituted $C_1$-$C_4$-alkyl group,
X designates an oxygen or sulphur atom,
Y designates an oxygen or sulphur atom or a group of the formula

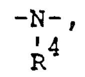

in which $R^4$ represents a hydrogen atom or a $C_1$-$C_4$-alkyl group,
Z designates a hydrogen atom, a halogen atom or a $C_1$-$C_4$-alkyl group and
n designates 0 or 2,

characterised in that

(i) a compound of the general formula (II)

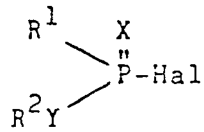

(II)

in which $R^1$, $R^2$, X and Y have the aforementioned meanings and Hal designates a halogen atom, is reacted with a compound of the general formula (III)

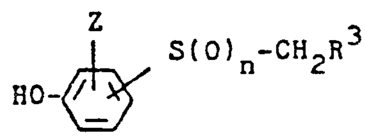

(III)

in which $R^3$, Z and n have the aforementioned meanings, in the presence of a base or

(ii) a compound of the general formula (IV)

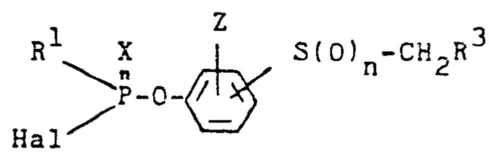

(IV)

in which $R^1$, $R^3$, X, Z, n and Hal have the aforementioned meanings, is reacted with a compound of the general formula

$$H—Y—R^2 \quad (V)$$

in which $R^2$ and Y have the aforementioned meanings, in the presence of a base, or

(iii) for the preparation of compounds of the formula (I) in which n represents 2, a compound of the general formula (Ia)

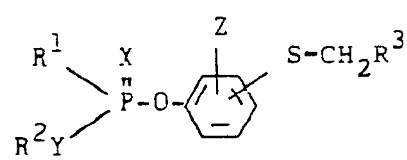

(Ia)

in which $R^1$, $R^2$, $R^3$, X, Y and Z have the aforementioned meanings, is reacted with a peroxide.

8. Insecticidal, miticidal or nematicidal agent, containing a phosphonic acid ester of the general formula (I) according to claim 1 or claim 7.

9. Method of combating pests, characterised in that a compound of the general formula (I) according to claim 1 or claim 7 is applied to the pests or their habitat.

10. Process for the preparation of a composition according to claim 8, characterised in that a compound of the general formula (I) according to claim 1 or claim 7 is mixed with at least one inert diluent or excipient.

**Revendications**

1. Esters phosphoniques de formule générale I

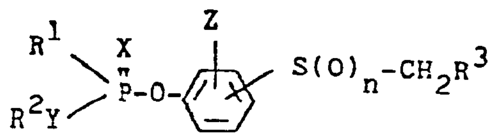

(I)

dans laquelle

$R^1$ représente un groupe alkyle en $C_1$-$C_4$, phényle, alpha-naphtyle ou bêta-naphtyle
$R^2$ représente un groupe alkyle en $C_1$-$C_4$ ou un groupe (alcoxy en $C_1$-$C_4$)-alkyle en $C_1$-$C_4$.
$R^3$ représente un groupe alkyle en $C_1$-$C_4$ substitué par le fluor,
X représente un atome d'oxygène ou de soufre,
Y représente un atome d'oxygène ou de soufre ou un groupe de formule

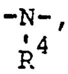

dans laquelle $R^4$ représente un atome d'hydrogène ou un groupe alkyle en $C_1$-$C_4$,
Z représente un atome d'hydrogène, un atome d'halogène ou un groupe alkyle en $C_1$-$C_4$, et
n est égal à 0 ou 2.

2. L'O-éthyl-O-[4-(β,β,β-trifluoréthylthio)-phényl]-méthane-thiophosphonate de formule

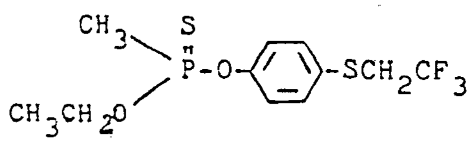

3. L'O-éthyl-O-[4-(β,β,β-trifluoréthylthio)-phényl]-éthane-thiophosphonate de formule

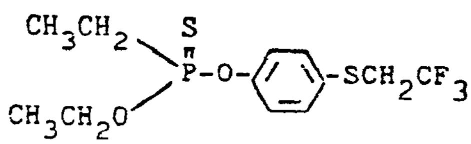

4. L'O-éthyl-O-[4-(β,β,β-trifluoréthylthio)-phényl]-benzène-thiophosphonate de formule

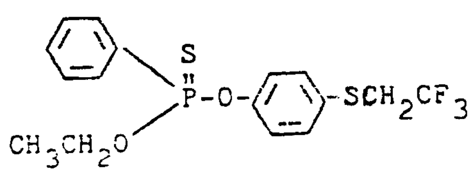

5. L'ester-amide N-isopropyl-O-[4-(β,β,β-trifluoréthylthio)-phényl]-méthane-thiophosphonique de formule

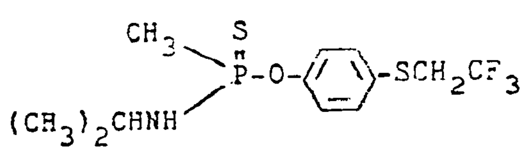

6. Le S-(2-éthoxyéthyl)-O-[4-(β,β,β-trifluoréthylthio)-phényl]-méthane-dithiophosphonate de formule

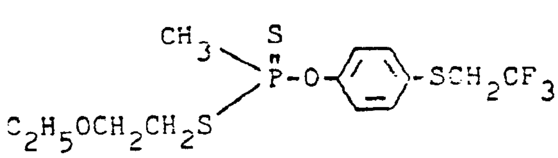

7. Procédé de préparation d'un ester phosphonique de formule générale I

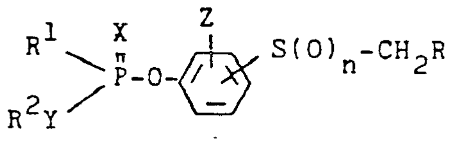

(I)

dans laquelle
$R^1$ représente un groupe alkyle en $C_1$-$C_4$, phényle, alpha-naphtyle ou bêta-naphtyle
$R^2$ représente un groupe alkyle en $C_1$-$C_4$ ou (alcoxy en $C_1$-$C_4$)-alkyle en $C_1$-$C_4$
$R^3$ représente un groupe alkyle en $C_1$-$C_4$ substitué par le fluor,
X représente un atome d'oxygène ou de soufre,
Y représente un atome d'oxygène ou de soufre ou un groupe de formule

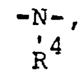

dans laquelle $R^4$ représente un atome d'hydrogène ou un groupe alkyle en $C_1$-$C_4$,
Z représente un atome d'hydrogène, un atome d'halogène ou un groupe alkyle en $C_1$-$C_4$, et
n est égal à 0 ou 2,
caractérisé en ce que :
(i) on fait réagir un composé de formule générale II

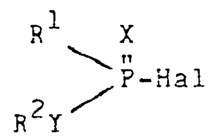

(II)

dans laquelle $R^1$, $R^2$, X et Y ont les significations indiquées ci-dessus et Hal représente un atome d'halogène, avec un composé de formule générale III

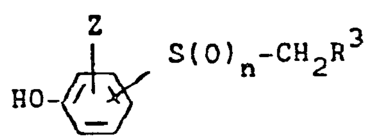

(III)

dans laquelle $R^3$, Z et n ont les significations indiquées ci-dessus, en présence d'une base, ou bien
(ii) on fait réagir un composé de formule générale IV

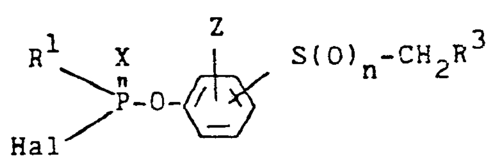

(IV)

dans laquelle $R^1$, $R^3$, X, Z, n et Hal ont les significations indiquées ci-dessus, avec un composé de formule générale

$$H—Y—R^2 \quad (V)$$

dans laquelle $R^2$ et Y ont les significations indiquées ci-dessus, en présence d'une base, ou bien
(iii) pour préparer les composés de formule I dans laquelle n est égal à 2, on fait réagir un composé de formule générale Ia

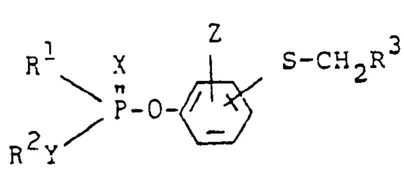

(Ia)

dans laquelle $R^1$, $R^2$, $R^3$, X, Y et Z ont les significations indiquées ci-dessus, avec un peroxyde.

8. Produit insecticide, miticide ou nématocide contenant un ester phosphonique de formule générale I selon la revendication 1 ou la revendication 7.

9. Procédé pour combattre les parasites, caractérisé en ce qu'on applique sur les parasites ou leur habitat un composé de formule générale I selon la revendication 1 ou la revendication 7.

10. Procédé de préparation d'une composition selon la revendication 8, caractérisé en ce que l'on mélange un composé de formule générale I selon la revendication 1 ou la revendication 7 avec au moins un diluant ou véhicule inerte.